# EUROPEAN PATENT SPECIFICATION

(11) **EP 2 273 587 B1**
(45) Date of publication and mention of the grant of the patent: **29.05.2013**
(21) Application number: 10167890.2
(22) Date of filing: 30.06.2010
(51) Int. Cl.: H01M 2/34, H01M 2/04, H01M 10/42, H01M 2/08, H01M 2/12, H01M 2/30, H01M 2/06

(54) **Rechargeable battery**
Wiederaufladbare Batterie
Batterie rechargeable

(30) Priority: 09.07.2009 US 224392 P; 25.11.2009 US 626582
(43) Date of publication of application: 12.01.2011
(73) Proprietor: Samsung SDI Co., Ltd., Gyeonggi-do (KR); Robert Bosch GmbH, 70442 Stuttgart (DE)
(72) Inventor: Kim, Yong-Sam, Gyeonggi-do (KR); Byun, Sang-Won, Gyeonggi-do (KR); Kim, Hyo-Seob, Gyeonggi-do (KR)
(74) Representative: Gulde Hengelhaupt Ziebig & Schneider

(56) References cited:
- EP-A2- 1 076 350
- EP-A2- 1 717 886
- JP-A- 5 062 664
- JP-A- 2004 319 463
- US-B1- 6 399 237

## Description

### Field

The described technology relates generally to a rechargeable battery.

### Description of the Related Art

A rechargeable battery can be repeatedly charged and discharged, unlike a primary battery that is incapable of being recharged. A low capacity rechargeable battery is generally used for a portable small electronic device, such as a mobile phone, a notebook computer, and a camcorder, and a large capacity rechargeable battery is widely used as a power source for driving a motor for a hybrid electric vehicle. Recently, a high power rechargeable battery using a non-aqueous electrolyte having a high energy density has been developed, and such a high power rechargeable battery is composed of a plurality of rechargeable batteries coupled in series so as to be used to drive a motor for an electric vehicle, for example, which requires high power.

Moreover, a large capacity rechargeable battery is composed of a plurality of rechargeable batteries coupled in series, and the rechargeable battery may have a cylindrical or prismatic shape. The prismatic rechargeable battery includes an electrode assembly having an anode and a cathode with a separator interposed therebetween, a case having a space for receiving the electrode assembly, a cap plate closing and sealing the case and having a terminal hole through which a terminal is inserted, and the terminal electrically connected to the electrode assembly, inserted into the terminal hole, and protruding to the outside of the case. When excessive heat is generated in the rechargeable battery or when the internal pressure increases as an electrolyte solution is decomposed, the battery may explode or catch fire. Particularly, in the case of the prismatic battery, it is not easy to have a structure that cuts off or discharges current due to its specific characteristics of the terminal structure, compared to the cylindrical battery.

EP 1 717 886 A2 discloses a secondary battery in which the cap plate deforms upon an external force applied to the battery such that the cap plate being one terminal of the battery comes into contact with a second terminal of the battery. However, it is difficult to define the exact contact point and the pressure necessary to deform the contact plate such that the short is established.

JP05062664 also discloses a battery with a safety arrangement in the cap assembly

The above information disclosed in this Background section is only for enhancement of understanding of the background of the described technology and therefore it may contain information that does not form the prior art that is already known in this country to a person of ordinary skill in the art.

### SUMMARY

The described technology has been made in an effort to provide a rechargeable battery having an improved safety. An exemplary embodiment of the present invention provides a rechargeable battery comprising an electrode assembly having a first electrode, a second electrode, and a separator interposed between the first and the second electrodes, a case for mounting the electrode assembly therein, and a cap assembly comprising a cap plate for closing an opening of the case. The cap assembly comprises a deformable plate attached to the cap plate, the deformable plate being in communication with the inside of the battery and adapted to be deformed to short-circuit the first electrode and the second electrode. The deformable plate comprises a curved or an arc or a convex shaped deformable region, curved toward and protruding into the interior of the battery.

The safety of the battery is improved by providing a deformable plate which allows short-circuiting the battery.

The deformable plate is preferably adapted to be deformed upon an increase of an internal pressure inside the case to short-circuit the first electrode and the second electrode. Additionally or alternatively, the deformable plate may be made of conductive material and/or may be electrically connected to the second electrode via the cap plate.

According to the present invention, a short circuit occurs when the internal pressure of the rechargeable battery increases, and thus it is possible to prevent the rechargeable battery from exploding or catching fire.

The cap assembly further comprises a first tab located outside of the case and electrically connected to the first electrode, wherein the deformable plate is adapted to be deformed such that it contacts the first tab and thereby the first electrode. The first tab may be disposed on the cap plate on the outside of the battery.

Advantageously, since the space in which the deformable plate contacts the first tab is separated from the space in which the electrolyte solution is located inside the battery, it is possible to prevent the electrolyte solution from catching fire due to flame or heat generated during the short circuit. Since a large current flows instantaneously when the short circuit occurs, the internal temperature of the battery may significantly increase if the short circuit region is located inside the case. However, according to the present invention, the first tab is located outside the case such that heat can be dissipated to the outside through the first tab, and thus it is possible to prevent heat from being excessively accumulated inside the case.

The cap assembly preferably further comprises an insulating member such that the first tab is coupled to the cap plate with the insulating member interposed therebetween to electrically isolate the first tab from the cap plates. The insulating member may have a u-shape with an opening into which the first tab is inserted.

The cap assembly further comprises a first terminal protruding to the outside of the cap plate and electrically connected to the first electrode and the first tab. Additionally, the cap assembly further comprises a gasket interposed between the cap plate and the first terminal to insulate the cap plate and the first terminal from each other.

In one embodiment, the first tab is attached to the first terminal by press-fitting the first tab between a region of the first terminal and the gasket.

The cap plate preferably further comprises a hole covered by the deformable plate.

The deformable plate is preferably adapted to be irreversibly deformed to short-circuit the first electrode and the second electrode such that the short-circuit is maintained after its establishment.

Advantageously, the lifetime of the inventive deformable plate is prolonged with respect to a spring of the state of the art. The deformable plate of the present invention does not encounter a force and does not undergo an elastic deformation under a normal inner pressure of the battery at normal operation times of the battery, and thus the deformable plate can operate at a predetermined pressure even after the lapse of considerable time.

The location in which the deformable plate contacts the first tab is preferably provided outside of the battery.

Advantageously, the danger of electrolyte solution ignition upon establishment of the short is reduced.

In the exemplary embodiment, the cap assembly further comprises a second terminal connected to the second electrode protruding to the outside of the battery, a gasket for sealing the cap plate in the region of the second terminal, and a connection tab for electrically connecting the second terminal and the cap plate such that the deformable plate contacts the second terminal via the cap plate and the deformable plate is adapted to contact the first terminal via the first tab.

The cap assembly may further comprise a vent member having a predetermined breaking point.

The battery is preferably a prismatic battery and/or the case has a cuboid shape.

### BRIEF DESCRIPTION OF THE DRAWINGS

FIG. 1 is a perspective view showing a rechargeable battery in accordance with an example.
FIG. 2 is a cross-sectional view taken along line II-II of FIG. 1.
FIG. 3 is a cross-sectional view showing a rechargeable battery in accordance with an exemplary embodiment of the present invention.

### DETAILED DESCRIPTION

In the following description, a "deformable plate" includes all kinds of plates which are deformed by an increase in pressure, and the present invention does not particularly limit the shape. The deformable plate may also be called reversing plate since it may reverse its shape.

Hereinafter, exemplary embodiments of the present invention will be described in detail with reference to the accompanying drawings such that those having ordinary skill in the art to which the present invention pertains may easily implement the technological concept of the present invention. However, the present invention may be implemented in various different ways and are not limited to the following exemplary embodiments. Like reference numerals designate like constituent elements throughout the specification.

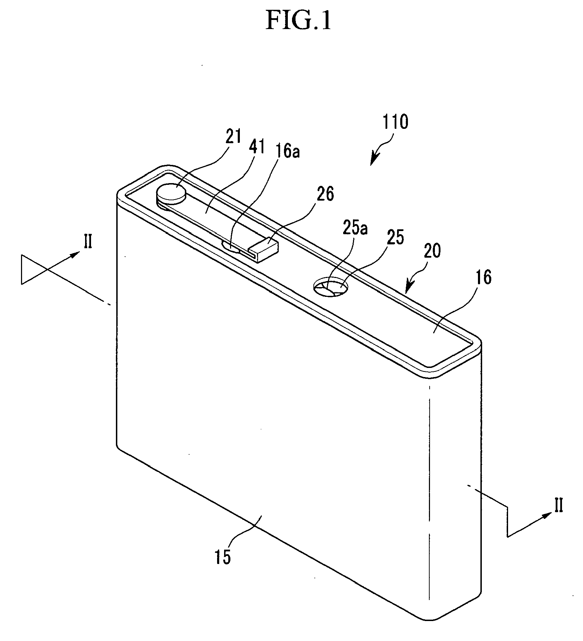

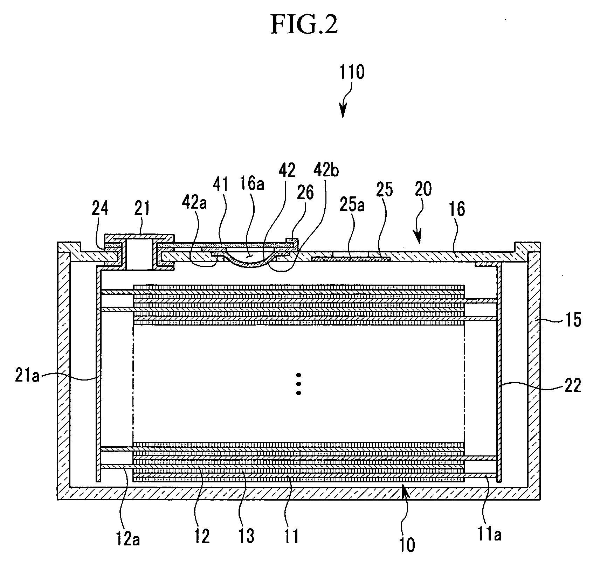

FIG. 1 is a perspective view showing a rechargeable battery in accordance with an example, and FIG. 2 is a cross-sectional view taken along line II-II of FIG. 1.

Referring to FIGS. 1 and 2, a rechargeable battery 110 in accordance with an example includes an electrode assembly 10 formed by interposing a separator 13 as an insulator between a positive electrode 11 and a negative electrode 12, a case 15 in which the electrode assembly 10 is received, and a cap assembly 20 connected to an opening of the case 15.

The rechargeable battery in accordance with the exemplary embodiment is a lithium ion secondary battery and will be described as an example of a prismatic battery. However, the present invention is not limited thereto, but may be applied to various types of batteries such as a lithium polymer battery or cylindrical battery.

Each of the positive electrode 11 and the negative electrode 12 includes a coated region in which an active material is coated on a current collector formed of a thin metal foil and uncoated regions 11 a and 12a in which the active material is not coated. Here, the negative electrode 12 may be referred to as a first electrode, the positive electrode 11 may be referred to as a second electrode, and vice versa. A positive uncoated region 11 a is formed on one end of the positive electrode 11 along the longitudinal direction of the positive electrode 11, and a negative uncoated region 12a is formed on one end of the negative electrode 12 opposite to the positive uncoated region 11 a along the longitudinal direction of the negative electrode 12. The positive electrode 11 and the negative electrode 12 are spirally wound with the separator 13 as an insulator interposed between the positive electrode 11 and the negative electrode 12.

However, the present invention is not limited thereto, but the electrode assembly 10 may have a structure in which a plurality of positive electrodes and a plurality of negative electrodes each composed of a plurality of sheets are stacked with a separator interposed therebetween.

The case 15 has a substantially cuboid shape having an opening side. The cap assembly 20 includes a cap plate 16 covering the opening of the case 15, a first terminal 21 protruding to the outside of the cap plate 16 and electrically connected to the negative electrode 12, and a first short tab or first tab 41 electrically connected to the first terminal 21 and inserted into the cap plate 16 with an insulating member 26 interposed therebetween.

The cap plate 16 is formed of a thin plate, and a vent member 25 having a notch 25a, which is broken by a predetermined internal pressure, is fixed to the cap plate 16. Preferably, the deformable plate 42 is adapted to be deformed at a lower internal pressure than required for opening the vent member 25. In this way, it is ensured that after the battery is opened to its surrounding, the internal pressure or temperature is not able to further increase since the battery is short-circuited before. Thus, the safety of the battery is improved. However, since the deformation of the deformable plate 42 according to the invention is preferably irreversible, the deformable plate 42 may have a larger thickness than the vent member 25 but may be formed of a different material.

The cap assembly 20 includes a deformable plate 42 short-circuiting the positive electrode 11 and the negative electrode 12, and the deformable plate 42 short-circuits the first tab 41 and a second short tab or second tab when the internal pressure of the rechargeable battery 110 increases. The deformable plate 42 of the example is fixedly mounted on the cap plate 16 such that the cap plate 16 serves as the second tab.

A gasket 24 is interposed between the cap plate 16 and the first terminal 21 to insulate the cap plate 16 and the first terminal 21 from each other. The first terminal 21 is electrically connected to the negative electrode 12 via a negative electrode lead tab 21 a, and the cap plate 16 is electrically connected to the positive electrode 11 via a positive electrode lead tab 22.

The first terminal 21 penetrates the cap plate 16 and protrudes to the outside thereof, and the first tab 41 is inserted into the first terminal 21. In this state, the top of the first terminal 21 is spread by applying pressure, and the first tab 41 is fixed between the first terminal 21 and the gasket 24. That is, the first terminal 21 in accordance with the present example is formed in a rivet shape. However, the present invention is not limited thereto, but the first terminal 21 and the first tab 41 may be fixed by fastening a nut to the first terminal 21.

The first tab 41 has a substantially plate shape and is disposed on the cap plate 16.

The deformable plate 42 is disposed below a short hole 16a and has an adhesion region 42a adhered to the lower surface of the cap plate 16 by welding and a deformation region 42b formed inside the adhesion region 42a and protruding in an arc shape toward the electrode assembly 10. Therefore, the deformable plate 42 is electrically connected to the positive electrode 11 through the cap plate 16.

When the internal pressure of the rechargeable battery 110 increases, the deformation region 42b protruding downwardly is reversed or deformed upwardly to contact the short tab 41, and thereby the positive electrode 11 and the negative electrode 12 are short-circuited with each other.

As such, according to the example, when the internal pressure of the rechargeable battery 110 excessively increases as the temperature increases or as an electrolyte solution is decomposed, the deformation region 42b causes a short circuit, thus preventing the rechargeable battery 110 from exploding or catching fire. Since the pressure at which the deformable plate 42 is deformed can be easily adjusted by changing its thickness and shape, it is possible to accurately set the pressure that causes a short circuit.

Particularly, since the space in which the deformable plate 42 contacts the first tab 41 is separated from the space in which the electrolyte solution is located, it is possible to prevent the electrolyte solution from catching fire due to flame or heat generated during the short circuit. Since a large current flows instantaneously when the short circuit occurs, the internal temperature of the battery may significantly increase if the short circuit region is located in the case 15. However, according to the present example, the first tab 41 is located outside the case 15 such that heat can be dissipated to the outside through the first tab 41, and thus it is possible to prevent heat from being excessively accumulated inside the case 15.

Moreover, since a pressing force is continuously applied to an elastic member such as a spring at all times, its elasticity may be reduced or completely eliminated if it is used for a long time. In order to ensure safety with respect to the cycle-life of the rechargeable battery 110, it is important that the elastic member does not lose its elasticity during the use of the rechargeable battery 110 but operates at a predetermined pressure. However, the elastic member such as a spring may lose its elasticity during the use of the rechargeable battery 110 and thus may not operate at the predetermined pressure. According to the present example, the deformable plate 42 does not undergo an elastic deformation under a normal inner pressure at ordinary times, and thus the deformable plate 42 can operate at the predetermined pressure even after the lapse of considerable time.

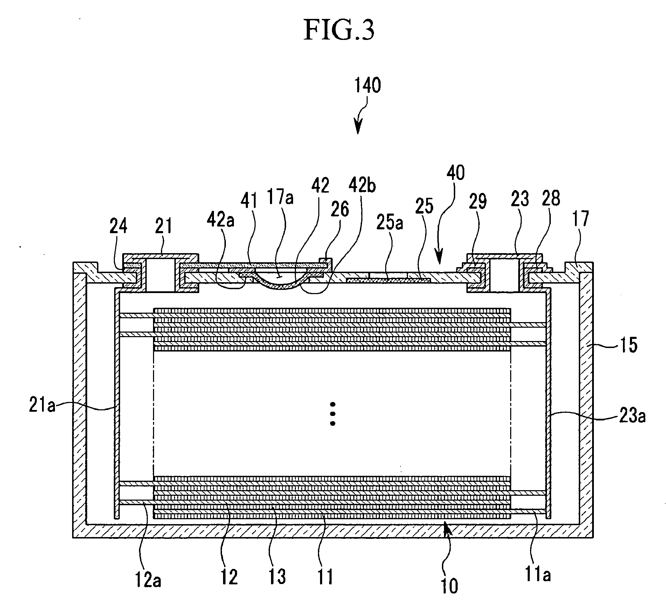

FIG. 3 is a cross-sectional view showing a rechargeable battery in accordance with an exemplary embodiment of the present invention.

Referring to FIG. 3, a rechargeable battery 120 in accordance with the exemplary embodiment has the same structure as the rechargeable battery 110 in accordance with the example except for a cap assembly 40, and therefore repeated description of the same elements will be omitted.

As shown in FIG. 3, a cap assembly 40 in accordance with the present exemplary embodiment includes a second terminal 23 connected to a positive electrode 11. The second terminal 23 penetrating a cap plate 17 protrudes to the outside thereof and is electrically connected to the positive electrode 11 via a positive electrode lead tab 23a.

Moreover, a gasket 28 for sealing the second terminal 23 and the cap plate 17 is interposed therebetween, and a connection tab 29 for electrically connecting the cap plate 16 and the second terminal 23 is mounted on the second terminal 23. The connection tab 29 is inserted into the second terminal 23 and fixed between the second terminal 23 and the cap plate 17.

When a deformable plate 42 is deformed by an increase in the internal pressure of the rechargeable battery 120, the second terminal 23 is connected to the deformable plate 42 via the cap plate 17, the first terminal 21 is connected to the deformable plate 42 via the first tab 41, and thus the positive electrode and the negative electrode are short-circuited with each other.

While this invention has been described in connection with what is presently considered to be practical exemplary embodiments, it is to be understood that the invention is not limited to the disclosed embodiments, but, on the contrary, is intended to cover various modifications and equivalent arrangements included within the scope of the appended claims.

## Claims

1. A rechargeable battery (140) comprising:
an electrode assembly (10) having a first electrode (12), a second electrode (11), and a separator (13) interposed between the first and the second electrodes (12, 11);
a case (15) for mounting the electrode assembly (10) therein;
a cap assembly (40) comprising:
a cap plate (17) for closing an opening of the case (15);
a deformable plate (42) attached to the cap plate (17), the deformable plate (42) being in communication with the inside of the battery (140) and adapted to be deformed to short-circuit the first electrode (12) and the second electrode (11), and
a first tab (41) located outside of the case (15) and electrically connected to the first electrode (12),
**characterized in that**
the deformable plate (42) comprises a curved or an arc or a convex shaped deformable region, curved toward and protruding into the interior of the battery (140), and
the cap assembly further comprises:
a first terminal (21) provided protruding through the cap plate to the outside of the cap plate (17) and electrically connected to the first electrode (12) and the first tab (41);
a gasket (24) interposed between the cap plate (17) and the first terminal (21) to insulate the cap plate (17) and the first terminal (21) from each other,
a second terminal (23) connected to the second electrode (11) protruding to the outside of the battery (140);
a gasket (28) for sealing the cap plate (17) in the region of the second terminal (23); and
a connection tab (29) for electrically connecting the second terminal (23) and the cap plate (17) such that the deformable plate (42) contacts the second terminal (23) via the cap plate (17) and the deformable plate (42) is adapted to contact the first terminal (21) via the first tab (41).

2. Rechargeable battery (140) according to claim 1, wherein the deformable plate (42):
is adapted to be deformed upon an increase of an internal pressure inside the case (15) to short-circuit the first electrode (12) and the second electrode (11); and/or
is made of conductive material.

3. Rechargeable battery (140) according to claim 1, wherein the first tab (41) is disposed on the cap plate (17) on the outside of the battery ( 140).

4. Rechargeable battery (140) according to claim 1 or 3, wherein the cap assembly (40) further comprises an insulating member (26) such that the first tab (41) is coupled to the cap plate (17) with the insulating member (26) interposed therebetween to electrically isolate the first tab (41) from the cap plate (17).

5. Rechargeable battery (140) according to claim 4, wherein the insulating member (26) has a u-shape with an opening into which the first tab (41) is inserted.

6. Rechargeable battery (140) according to claim 1, wherein the first tab (41) is attached to the first terminal (21) by press-fitting the first tab (41) between a region of the first terminal (21) and the gasket (24).

7. Rechargeable battery (140) according to any of the previous claims, wherein the cap plate (17) further comprises a hole (17a) covered by the deformable plate (42).

8. Rechargeable battery (140) according to any of the previous claims, wherein the deformable plate (42) is adapted to be irreversibly deformed to short-circuit the first electrode (12) and the second electrode (11) such that the short-circuit is maintained after its establishment.

9. Rechargeable battery (140) according to any of the previous claims, wherein the location in which the deformable plate (42) contacts the first tab (41) is provided outside of the battery (140).

10. Rechargeable battery (140) according to any of the previous claims, wherein the cap assembly (40) further comprises a vent member (25) having a predetermined breaking point (25a).

11. Rechargeable battery (140) according to any of the previous claims, wherein the battery (140) is a prismatic battery and/or the case (15) has a cuboid shape.

## Patentansprüche

1. Wiederaufladbare Batterie (140), umfassend:
eine Elektrodenanordnung (10) mit einer ersten Elektrode (12), einer zweiten Elektrode (11) und einem zwischen die erste und die zweite Elektrode (12, 11) geschalteten Separator (13);
ein Gehäuse (15) zum Anbringen der Elektrodenanordnung (10) in diesem;
eine Abdeckanordnung (40), umfassend:
eine Abdeckplatte (17) zum Verschließen einer Öffnung des Gehäuses (15);
eine an der Abdeckplatte (17) befestigte verformbare Platte (42), wobei die verformbare Platte (42) mit dem Inneren der Batterie (140) in Verbindung steht und ausgeführt ist, verformt zu werden, um die erste Elektrode (12) und die zweite Elektrode (11) kurzzuschließen, und
einen ersten Steg (41), der sich außerhalb des Gehäuses (15) befindet und elektrisch mit der ersten Elektrode (12) verbunden ist,
**dadurch gekennzeichnet, dass**
die verformbare Platte (42) einen gekrümmten oder bogenförmigen oder konvexen verformbaren Bereich umfasst, gekrümmt in Richtung und vorspringend in das Innere der Batterie (140), und
die Abdeckanordnung ferner umfasst:
eine erste Klemme (21), die so vorgesehen ist, dass sie durch die Abdeckplatte zur Außenseite der Abdeckplatte (17) hin vorsteht und elektrisch mit der ersten Elektrode (12) und dem ersten Steg (41) verbunden ist;
eine Dichtung (24), die zwischen der Abdeckplatte (17) und der ersten Klemme (21) angeordnet ist, um die Abdeckplatte (17) und die erste Klemme (21) voneinander zu isolieren,
eine mit der zweiten Elektrode (11) verbundene zweite Klemme (23), die zur Außenseite der Batterie (140) hin vorsteht;
eine Dichtung (28) zum Abdichten der Abdeckplatte (17) im Bereich der zweiten Klemme (23); und
ein Verbindungsstück (29) zum elektrischen Verbinden der zweiten Klemme (23) und der Abdeckplatte (17) derart, dass die verformbare Platte (42) über die Abdeckplatte (17) mit der zweiten Klemme (23) in Kontakt gelangt, und die verformbare
Platte (42) ausgeführt ist, über den ersten Steg (41) mit der ersten Klemme (21) in Kontakt zu gelangen.

2. Wiederaufladbare Batterie (140) nach Anspruch 1, wobei die verformbare Platte (42):
ausgeführt ist, bei Erhöhung eines Innendrucks im Gehäuse (15) verformt zu werden, um die erste Elektrode (12) und die zweite Elektrode (11) kurzzuschließen; und/oder
aus einem leitfähigen Material besteht.

3. Wiederaufladbare Batterie (140) nach Anspruch 1, wobei der erste Steg (41) auf der Abdeckplatte (17) an der Außenseite der Batterie (140) angeordnet ist.

4. Wiederaufladbare Batterie (140) nach Anspruch 1 oder 3, wobei die Abdeckanordnung (40) ferner ein Isolierelement (26) derart umfasst, dass der erste Steg (41) so mit der Abdeckplatte (17) verbunden ist, dass das Isolierelement (26) dazwischen liegt, um den ersten Steg (41) von der Abdeckplatte (17) elektrisch zu isolieren.

5. Wiederaufladbare Batterie (140) nach Anspruch 4, wobei das Isolierelement (26) eine U-Form aufweist, mit einer Öffnung, in die der erste Steg (41) eingesteckt ist.

6. Wiederaufladbare Batterie (140) nach Anspruch 1, wobei der erste Steg (41) mittels Presspassen des ersten Stegs (41) zwischen einen Bereich der ersten Klemme (21) und der Dichtung (24) an der ersten Klemme (21) befestigt ist.

7. Wiederaufladbare Batterie (140) nach einem der vorstehenden Ansprüche, wobei die Abdeckplatte (17) ferner ein von der verformbaren Platte (42) bedecktes Loch (17a) aufweist.

8. Wiederaufladbare Batterie (140) nach einem der vorstehenden Ansprüche, wobei die verformbare Platte (42) ausgeführt ist, irreversibel verformt zu werden, um die erste Elektrode (12) und die zweite Elektrode (11) derart kurzzuschließen, dass der Kurzschluss nach seiner Herstellung aufrechterhalten bleibt.

9. Wiederaufladbare Batterie (140) nach einem der vorstehenden Ansprüche, wobei die Stelle, an der die verformbare Platte (42) mit dem ersten Steg (41) in Kontakt gelangt, außerhalb der Batterie (140) liegt.

10. Wiederaufladbare Batterie (140) nach einem der vorstehenden Ansprüche, wobei die Abdeckanordnung (40) ferner ein Entlüftungselement (25) mit einer Sollbruchstelle (25a) umfasst.

11. Wiederaufladbare Batterie (140) nach einem der vorstehenden Ansprüche, wobei die Batterie (140) eine prismatische Batterie ist und/oder das Gehäuse (15) eine Quaderform aufweist.

## Revendications

1. Batterie rechargeable (140), comprenant :
un ensemble d'électrodes (10) comportant une première électrode (12), une deuxième électrode (11) et un séparateur (13) interposé entre les première et deuxième électrodes (12, 11) ;
un boîtier (15) pour monter l'ensemble d'électrodes (10) à l'intérieur de celui-ci ;
un ensemble de capuchon (40), comprenant :
une plaque de capuchon (17) pour fermer une ouverture du boîtier (15) ;
une plaque déformable (42) fixée à la plaque de capuchon (17), la plaque déformable (42) étant en communication avec l'intérieur de la batterie (140) et conçue pour être déformée afin de court-circuiter la première électrode (12) et la deuxième électrode (11), et
une première patte (41) disposée à l'extérieur du boîtier (15) et électriquement connectée à la première électrode (12),
**caractérisée en ce que** :
la plaque déformable (42) comprend une région déformable en forme d'arc ou de forme incurvée ou convexe, incurvée vers l'intérieur de la batterie (140) et faisant saillie à l'intérieur de celle-ci, et
l'ensemble de capuchon comprend de plus :
une première borne (21) disposée de façon à faire saillie à travers la plaque de capuchon vers l'extérieur de la plaque de capuchon (17) et électriquement connectée à la première électrode (12) et à la première patte (41) ;
un joint d'étanchéité (24) interposé entre la plaque de capuchon (17) et la première borne (21) de façon à isoler la plaque de capuchon (17) et la première borne (21) l'une de l'autre,
une deuxième borne (23) connectée à la deuxième électrode (11), faisant saillie vers l'extérieur de la batterie (140) ;
un joint d'étanchéité (28) pour sceller de façon étanche la plaque de capuchon (17) dans la région de la deuxième borne (23) ; et
une patte de connexion (29) pour connecter électriquement la deuxième borne (23) et la plaque de capuchon (17) de telle sorte que la plaque déformable (42) vienne en contact avec la deuxième borne (23) par l'intermédiaire de la plaque de capuchon (17) et que la plaque déformable (42) soit apte à venir en contact avec la première borne (21) par l'intermédiaire de la première patte (41).

2. Batterie rechargeable (140) selon la revendication 1, dans laquelle la plaque déformable (42) :
est conçue pour être déformée lors d'une augmentation d'une pression interne à l'intérieur du boîtier (15) de façon à court-circuiter la première électrode (12) et la deuxième électrode (11) ; et/ou
est réalisée en un matériau conducteur.

3. Batterie rechargeable (140) selon la revendication 1, dans laquelle la première patte (41) est disposée sur la plaque de capuchon (17) sur l'extérieur de la batterie (140).

4. Batterie rechargeable (140) selon la revendication 1 ou 3, dans laquelle l'ensemble de capuchon (40) comprend de plus un élément isolant (26), de telle sorte que la première patte (41) soit couplée à la plaque de capuchon (17) avec l'élément isolant (26) interposé entre celles-ci de façon à isoler électriquement la première patte (41) vis-à-vis de la plaque de capuchon (17).

5. Batterie rechargeable (140) selon la revendication 4, dans laquelle l'élément isolant (26) a une forme de u avec une ouverture dans laquelle la première patte (41) est insérée.

6. Batterie rechargeable (140) selon la revendication 1, dans laquelle la première patte (41) est fixée à la première borne (21) par adaptation par pression de la première patte (41) entre une région de la première borne (21) et le joint d'étanchéité (24).

7. Batterie rechargeable (140) selon l'une quelconque des revendications précédentes, dans laquelle la plaque de capuchon (17) comprend de plus un trou (17a) recouvert par la plaque déformable (42).

8. Batterie rechargeable (140) selon l'une quelconque des revendications précédentes, dans laquelle la plaque déformable (42) est conçue pour être déformée de façon irréversible afin de court-circuiter la première électrode (12) et la deuxième électrode (11) de telle sorte que le court-circuit soit maintenu après son établissement.

9. Batterie rechargeable (140) selon l'une quelconque des revendications précédentes, dans laquelle l'emplacement dans lequel la plaque déformable (42) vient en contact avec la première patte (41) est situé à l'extérieur de la batterie (140).

10. Batterie rechargeable (140) selon l'une quelconque des revendications précédentes, dans laquelle l'ensemble de capuchon (40) comprend de plus un élément d'évacuation (25) comportant un point de rupture prédéterminé (25a).

11. Batterie rechargeable (140) selon l'une quelconque des revendications précédentes, ladite batterie (140) étant une batterie prismatique et/ou le boîtier (15) ayant une forme cuboïdale.
